# EUROPÄISCHE PATENTSCHRIFT

(11) **EP 3 265 251 B1**
(45) Veröffentlichungstag und Bekanntmachung des Hinweises auf die Patenterteilung: **11.08.2021**
(21) Anmeldenummer: 16708100.9
(22) Anmeldetag: 22.02.2016
(51) Int. Cl.: B21D 39/04, B21C 37/15

(54) **VERFAHREN UND BESCHICHTUNGSVORRICHTUNG ZUM AUFBRINGEN EINER AUFLAGESCHICHT BEI DER HERSTELLUNG EINES MEHRLAGIGEN GROSSROHRES**
METHOD AND COATING DEVICE FOR APPLYING A CLADDING LAYER DURING THE PRODUCTION OF A MULTILAYER HEAVY-DUTY PIPE
PROCÉDÉ ET DISPOSITIF DE REVÊTEMENT POUR APPLIQUER UNE COUCHE DE RECOUVREMENT LORS DE LA FABRICATION D'UN TUBE DE GRAND DIAMÈTRE MULTICOUCHE

(30) Priorität: 06.03.2015 DE 102015103338; 06.03.2015 DE 202015101441 U; 31.03.2015 DE 102015105006
(43) Veröffentlichungstag der Anmeldung: 10.01.2018
(73) Patentinhaber: Eisenbau Krämer GmbH, 57223 Kreuztal (DE)
(72) Erfinder: SCOBEL, Peter, 45768 Marl (DE)
(74) Vertreter: Fleck, Hermann-Josef
(86) Internationale Anmeldenummer: PCT/EP2016/053686
(87) Internationale Veröffentlichungsnummer: WO 2016/142162

(56) Entgegenhaltungen:
- WO-A1-2004/103603
- DE-A1-102005 029 679
- JP-A- S5 978 715

## Beschreibung

Die Erfindung bezieht sich auf ein Verfahren zum Herstellen eines mehrlagigen Großrohres mit einer Rohreinheit aus einem eine Trägerschicht bildenden Außenrohr und mindestend einem eine Auflageschicht bildenden Innenrohr sowie auf eine Beschichtungsvorrichtung zum Aufbringen der Auflageschicht auf der Innenseite der Trägerschicht mit einer eine Kraftbeaufschlagungseinheit aufweisenden Andrückeinheit.

Ein derartiges Verfahren mit einer entsprechenden Vorrichtung ist in der JP S59 787 15 A gezeigt. Hierbei wird ein in ein Außenrohr eingebrachtes Innenrohr mittels einer rotierend am Innenumfang des Innenrohrs abrollenden Andrückrolle unter Verformung der Wandung des Innenrohrs an die Innenfläche des Außenrohrs angedrückt und in dem Außenrohr festgelegt. Aus der JP S59 787 15 A ist ein Verfahren bekannt, zum Herstellen eines mehrlagigen Großrohres mit einer Rohreinheit aus einem eine Trägerschicht bildenden Außenrohr und mindestens einem eine Auflageschicht bildenden Innenrohr mit der Folge der Verfahrensschritte:Einbringen des Innenrohres in das Außenrohr, Einführen einer Andrückeinheit mit mindestens einer Andrückrolle, die geringeren Durchmesser als der Innendurchmesser des Innenrohres besitzt und mit ihrer Drehachse radial beabstandet von der Längsachse des Innenrohres drehbar gelagert ist, Beaufschlagen der Andrückrolle mit radial nach außen gegen die Innenfläche des Innenrohres gerichtetem Anpressdruck, Drehen der Andrückeinheit relativ zu der Rohreinheit unter Abrollen der Andrückrolle an der Innenfläche des Innenrohres und Andrücken der Außenfläche des Innenrohres an die Innenfläche des Außenrohres unter örtlicher plastischer Verformung der Innenrohrwandung, wobei die Andrückeinheit beim Abrollen der Andrückrolle dieser entgegenwirkend mittels einer Stützeinheit abgestützt wird und während des Abrollens der Andrückrolle die Andrückeinheit gleichzeitig relativ zur Rohreinheit axial vorgeschoben wird.Aus der JP S59 787 15 A ist auch eine Beschichtungsvorrichtung bekannt, zum Aufbringen einer Auflageschicht auf der Innenseite einer Trägerschicht bei der Herstellung eines mehrlagigen Großrohres mit einer eine Kraftbeaufschlagungseinheit aufweisenden Andrückeinheit, wobei die Beschichtungsvorrichtung ein Anrollwerkzeug mit der Andrückeinheit und der Kraftbeaufschlagungseinheit umfasst, die Andrückeinheit mit mindestens einer Andrückrolle geringeren Durchmessers als der Innendurchmesser des herzustellenden Großrohres sowie mit mindestens einem dieser im Betriebszustand mit einer Stützkraft entgegenwirkenden Stützelement versehen ist, die Andrückeinheit einen Andrücklagerteil, an dem die Andrückrolle drehbar gelagert ist, und einen Stützlagerteil aufweist, an dem das Stützelement gelagert ist, die Kraftbeaufschlagungseinheit zumindest teilweise zwischen dem Andrücklagerteil und dem Stützlagerteil angeordnet ist.

In der DE 10 2005 029 679 A1 sind eine Vorrichtung und ein Verfahren zum Fügen von Rohrprofilen mit einem Innenrohrprofil in einem Außenrohrprofil durch Aufweiten mittels eines Wälzelements angegeben, welches in einem Aufweitkopf angeordnet und zum Aufbringen der Walzkräfte mittels einer rotierenden Stützwelle abgestützt ist. Das Wälzelement bewegt sich planetenradartig um die Rotationsachse der Stützwelle, welche außermittig um die Mittenachse der Rohrprofile umläuft. Zum Verstellen des Wälzelements in radialer Richtung weist die Stützwelle einen konischen Abschnitt auf und kann ihrerseits in axialer Richtung verschoben werden. Auf dem Aufweitkopf ist ein beispielsweise als Stützrolle ausgebildetes Stützelement angeordnet, welches die an dem Wälzelement auftretenden Walzkräfte gegen die Innenfläche des Innenrohrprofils abstützt. Der Aufweitkopf kann entlang der Rohrachse versetzt werden, um an verschiedenen Stellen der Rohrprofile Fügeverbindungen durch Aufweiten herzustellen. Diese bekannte Vorrichtung ist insbesondere auch für das Fügen von Rohrprofilen bei kleineren Durchmessern ausgebildet.

Bei Großrohren indes liegen bereits durch den großen Innendurchmesser und zudem auch metallurgisch, wie in der Regel einem (praktisch) nicht elastisch aufweitbaren Außenrohr, gegebene Bedingungen vor, die das erforderliche stabile Einrollen einer inneren Auflageschicht schwierig machen. Dabei weisen Großrohre häufig Unrundheiten und Ovalitäten auf, so dass mittels einer rotierenden Stützrolle und einem damit angetriebenen planetenradartigen Wälzelement, also einem positionsgesteuertem Andrückvorgang, wegen der bei Unrundheiten auftretenden inhomogenen Andruckkraft eine gleichmäßig stabile Verbindung der Auflageschicht schwerlich erreichbar ist.

Eine weitere Beschichtungsvorrichtung ist in der WO 2004/103603 A1 angegeben. Diese bekannte Beschichtungsvorrichtung ist dazu ausgebildet, ein Außenrohr, das eine Trägerschicht bildet und auch als Trägerrohr bezeichnet wird, auf seiner Innenseite mit einer Auflageschicht zu versehen. Hierzu wird ein Innenrohr, auch als Linerrohr oder einfach als Liner bezeichnet, in das Außenrohr eingeschoben und danach mittels eines Expandierwerkzeuges radial bis zur Bindung mit dem Außenrohr expandiert, wobei das Innenrohr plastisch und das Außenrohr elastisch ausgedehnt wird, um ein mehrlagiges Großrohr herzustellen. Dieser Vorgang wird schrittweise wiederholt, bis die gesamte Länge des Großrohres expandiert ist. Das Expandierwerkzeug arbeitet hydraulisch und dabei trocken, so dass die Berührung des Innenrohres mit der Hydraulikflüssigkeit ausgeschlossen ist. Die kraftschlüssige mechanische Bindung zwischen den beiden Rohren wird dadurch erreicht, dass die elastische Rückfederung des Außenrohres größer ist als die Rückfederung des Innenrohres. Durch diese Art der Herstellung wird auch das Gefüge des stabilen Trägerrohres beeinflusst und die Kombination der Werkstoffe des Innenrohres und des Trägerrohres muss so gewählt werden, dass die Streckgrenze des Innenrohres niedriger liegt als die Streckgrenze des Außenrohres, womit entsprechende Einschränkungen und Nachteile verbunden sind.

Bei der Herstellung derartiger mehrlagiger Großrohre ist auch die Verwendung einer Beschichtungsvorrichtung bekannt, die eine sogenannte Hydroforming-Presse umfasst (z. B. Verfahren der Firma Butting). Dabei werden mittels Wasserdrucks das Innenrohr und das Außenrohr gemeinsam geringfügig expandiert, wobei Drücke eingesetzt werden, die das Außenrohr zum Fließen bringen, so dass ein Außengesenk notwendig ist, um das Großrohr vor unkontrollierter Ausdehnung und Bruch zu schützen.

Ein weiteres Verfahren zum Herstellen eines mehrlagigen Großrohres aus einem Außenrohr und einem Innenrohr in Form einer größtenteils kraftschlüssig verbundenen Auflageschicht ist in der DE 10 2013 103 811 B3 gezeigt. Bei der Herstellung wird ein bereits mit einer Anfangsbiegung vorgebogenes Trägerblech verwendet, auf das ein ebenfalls bereits vorgebogenes Auflageblech aufgelegt wird, welches entlang seiner beiden Längskanten mit dem Trägerblech verbunden wird, wonach der Verbund zu dem mehrlagigen Großrohr eingeformt und mit einer Längsschweißnaht versehen wird.

Auch die DE 10 2009 060 059 A1 zeigt ein Verfahren zum Herstellen eines mehrlagigen Großrohres. Hierbei wird die Wandung des Großrohres aus mindestens zwei metallischen Blechen gebildet, die mittels eines zwischen den Blechen eingebrachten Lots miteinander stoffschlüssig verbunden werden. Diese Art der Verbindung erfordert spezielle Materialpartner und eine darauf abgestimmte besondere Herstellungsweise, womit betreffende Einschränkungen vorgegeben sind.

Des Weiteren sind mehrlagige Großrohre bekannt, die als sogenannte Clad-Rohre metallurgisch mit einer Auflageschicht plattiert sind und so bereits beim Produktionsprozess der Platte in besonderen Fertigungsschritten ausgebildet werden. Bei dieser Vorgehensweise sind der Materialwahl für viele Einsatzfälle jedoch enge Grenzen gesetzt.

Der vorliegenden Erfindung liegt die Aufgabe zugrunde, ein Verfahren zum Herstellen eines mehrlagigen Großrohres und eine Beschichtungsvorrichtung der eingangs genannten Art bereit zu stellen, mittels dessen bzw. deren vielfältigere Möglichkeiten des Aufbringens einer Auflageschicht geboten werden.

Diese Aufgabe wird mit den Merkmalen der Ansprüche 1 bzw. Anspruch 8 gelöst.

Durch das Einrollen und Andrücken (Anrollen) der inneren Auflageschicht fortlaufend in Umlaufrichtung unter plastischer Verformung und das gleichzeitige axiale Verschieben der Andrückeinheit relativ zur Rohreinheit wird die Auflageschicht kraftschlüssig gleichmäßig stabil und dauerhaft auf der Innenfläche der Trägerschicht aufgetragen und gehalten, ohne dass das Außenrohr gedehnt werden muss. Die Trägerschicht, die einen dickwandigen stabilen Mantel bildet, wird somit in ihrem Gefüge praktisch nicht beeinflusst, so dass auch in ihren metallurgischen und/oder geometrischen Eigenschaften (Dicke) sehr unterschiedliche Materialpartner zur Herstellung des Großrohres kombiniert werden können. Möglich ist auch eine geringe Dehnung der Trägerschicht innerhalb deren Streckgrenze, falls erwünscht. Die Ausbildung des ursprünglichen Außenrohres und des (mindestens einen) ursprünglichen Innenrohres ist weitgehend frei wählbar, wobei lediglich der Innendurchmesser des Außenrohres und der Außendurchmesser des angrenzenden Innenrohres so aneinander angepasst sein sollen, dass das Innenrohr leicht in das Außenrohr einbringbar ist und durch den Anrollvorgang unter Dehnung über die Streckgrenze bzw. Plastifizierung entlang der Innenfläche des Außenrohres kraftschlüssig verbindbar ist. Eine praktisch glatte Innenfläche des fertigen Großrohres wird erreicht, wenn die Vorschubgeschwindigkeit der Andrückeinheit während des Abrollens der Andrückrolle auf deren Umlaufgeschwindigkeit an der Innenfläche der Rohreinheit so abgestimmt wird, dass sich die plastisch verformten, schraubenlinienförmig umlaufenden Streifen überlappen (z. B. einfach oder auch mehrfach).

Der Aufbau der Beschichtungsvorrichtung ermöglicht ein fortlaufendes Auftragen der Auflageschicht, insbesondere eines in ein Außenrohr als stabile Trägerschicht eingesetzten Innenrohres als Auflageschicht durch Anrollen. Durch den Anrollvorgang wird das Innenrohr fortlaufend unter plastischer Verformung gedehnt und dadurch stabil und dauerhft an die Innenseite des Außenrohres angedrückt, ohne das Außenrohr dehnen zu müssen, so dass dessen Materialgefüge unbeeinflusst bleiben kann. Hierdurch können auch praktisch beliebige metallische Materialkombinationen von Innenrohr und Außenrohr gewählt werden. Durch den angegebenen Aufbau der Beschichtungsvorrichtung wird bei hohem Anpressdruck mittels der Andrückrolle eine plastische Verformung des Innenrohres zum Bilden der Auflageschicht bewirkt. Während des Abrollens der Andrückrolle wird auch hierbei die Andrückeinheit, die mit einer zentralen (körperlichen) Achse verbunden ist, über diese axial fortlaufend (kontinuierlich) verfahren, wodurch sich die schraubenlinienförmig umlaufenden Streifen beim Anrollvorgang ergeben.

Dabei bestehen vorteilhafte Maßnahmen darin, dass beim Abrollen der Andrückrolle der Andruck so gewählt wird, dass das Außenrohr nicht gedehnt wird oder nur geringfügig unter seiner Streckgrenze gedehnt wird.

Die fortlaufende Vorgehensweise beim Aufbringen der Auflageschicht wird also dadurch erhalten, dass während des Abrollens die Andrückeinheit relativ zu der Rohreinheit axial vorgeschoben wird. Die Vorschubgeschwindigkeit der Andrückeinheit ist dabei auf die Umlaufgeschwindigkeit der Andrückrolle entlang der Innenfläche des Innenrohres so abgestimmt, dass sich eine (praktisch) glatte Andrückfläche bzw. Innenfläche der angedrückten Innenrohrbereiche ergibt. Die gewählten physikalischen Parameter sind dabei auch in Abhängigkeit des Materials des Innenrohres und der Geometrie der (mindestens einen) Andrückrolle festlegbar. Beispielsweise kann die Außenfläche der Andrückrolle in ihrem Querschnitt gerade und parallel zur Längserstreckung der Innenfläche des Innenrohres ausgebildet oder z. B. konisch oder nach außen konvex gewölbt sein, um unterschiedliche Andrückeigenschaften zu erzielen. Dadurch kann die Andrückfläche entsprechend variiert und ein Anrolleffekt unter örtlicher Materialverformung (ähnlich einem Walkvorgang) mehr oder weniger in Umlaufrichtung bzw. mehr oder weniger in Vorschubrichtung bewirkt werden.

Eine vorteilhafte Ausgestaltungsvariante des Verfahrens besteht beispielsweise darin, dass die Andrückeinheit relativ zu der Rohreinheit pro Umlauf der Andrückrolle über den Innenumfang des Innenrohres axial um einen Weg zwischen 1 mm und 10 mm vorgeschoben wird.

Eine weitere vorteilhafte Ausgestaltungsvariante besteht beispielsweise darin, dass die relative Drehgeschwindigkeit zwischen Andrückeinheit und Rohreinheit zwischen 5 und 100 Umdrehungen pro Minute liegt.

Hohe Andrückkräfte können dadurch bewirkt werden, dass die Andrückeinheit beim Abrollen der Andrückrolle dieser diametral entgegenwirkend mittels einer Stützeinheit an der Innenfläche des Innenrohres abgestützt wird.

Eine für die Durchführung des Verfahrens vorteilhafte Ausgestaltung besteht des Weiteren darin, dass die Andrückeinheit mittels einer koaxial in die Rohreinheit eingeführten Achse relativ zu der Rohreinheit gedreht wird, wobei die Achse mittels eines außerhalb oder innerhalb des Rohreinheit angeordneten Antriebs und/oder die Rohreinheit mittels eines Drehantriebs gedreht wird.

Für die Funktion und eine Optimierung des Fertigungsprozesses sind des Weiteren die Maßnahmen von Vorteil, dass die Drehung der Andrückeinheit relativ zu der Rohreinheit und/oder der Andruck gesteuert oder geregelt durchgeführt wird.

Hierbei bestehen weitere vorteilhafte Maßnahmen darin, dass die Steuerung oder Regelung in Abhängigkeit von geometrischen und/oder metallurgischen Materialeigenschaften der Auflageschicht erfolgt.

Zu einer guten Funktion der Beschichtungsvorrichtung tragen des Weiteren die Maßnahmen bei, dass das mindestens eine Stützelement als mindestens eine Stützrolle ausgebildet ist.

Weitere für die Funktion und den Aufbau vorteilhafte Maßnahmen bestehen darin, dass der Andrücklagerteil und der Stützlagerteil mittels der Kraftbeaufschlagungseinheit bezüglich einer Drehachse der Andrückrolle bzw. der zentralen Achse der Rohreinheit radial nach außen gegeneinander verstellbar sind, so dass die Andrückrolle im Betriebszustand zum Anrollen der Auflageschicht entgegen der Stützkraft mit der erforderlichen Andrückkraft auf die Innenseite der Auflageschicht bzw. des Innenrohres drückbar ist.

Verschiedene Ausgestaltungsvarianten zum Aufbringen der radial gerichteten, über die Andrückrolle auf das Innenrohr zum Verformen der Auflageschicht übertragenen Andruckkräfte bestehen darin, dass die Kraftbeaufschlagungseinheit eine hydraulisch oder mittels fester, mechanisch zusammenwirkender Spreizteile arbeitende Verstelleinheit aufweist.

Eine für den Aufbau und die Funktion weitere vorteilhafte Maßnahme besteht darin, dass die Andrückrolle mittels einer Drehachse in dem Andrücklagerteil gelagert ist.

Des Weiteren ist vorteilhaft vorgesehen, dass die Stützrolle mittels einer Lagerachse in dem Stützlagerteil drehbar gelagert ist.

Die Verformung des Innenrohres zum Bilden der Auflageschicht kann in verschiedener Weise dadurch beeinflusst werden, dass die Andrückrolle eine im Querschnitt ebene, schräge oder nach außen konische oder konvexe Andruckfläche besitzt. Beispielsweise kann dadurch je nach Material der Auflageschicht beim umlaufenden Andrücken unter (gleichzeitigem) geringem axialem Vorschub sichergestellt werden, dass die sich (fortlaufend) schraubenlinienförmig aneinander reihenden Andrückbereiche mehr oder weniger breit sind und/oder sich mehr oder weniger stark überlappen, um eine möglichst homogene, glatte Innenfläche der angedrückten Auflageschicht zu erhalten.

Für die Verbindung mit einer zentralen Führungsachse bzw. der zentralen Antriebswelle sind des Weiteren die Maßnahmen von Vorteil, dass die Andrückeinheit mit einem Verbindungsabschnitt mit einem Koppelteil zum Ankoppeln der zentralen Antriebswelle versehen ist. Mittels der zentralen Antriebswelle kann die Andrückeinheit relativ zu der Innenfläche des mehrlagigen Großrohres gedreht werden, wobei die Andrückeinheit bei ruhendem Großrohr oder das Großrohr bei nicht rotierender Andrückeinheit oder das Großrohr und die Andrückeinheit mit unterschiedlichen Rotationsgeschwindigkeiten gedreht werden können, wobei die Andrückrolle auf der Innenfläche abrollt. Gleichzeitig kann der relative Vorschub zwischen Großrohr und Andrückeinheit zum Erzeugen des axialen Vorschubs während der schraubenlinienförmigen Andrückbewegung ausgeführt werden.

Hierbei ist des Weiteren vorteilhaft vorgesehen, dass der Verbindungsabschnitt über einen Zwischenteil radial verschiebbar mit dem Koppelteil verbunden ist, so dass die Andrückeinheit bezüglich der Antriebswelle in radialer Richtung schwimmend gelagert ist. Diese Maßnahme trägt zum gleichmäßigen Andruck und zur stabilen Beschichten mit der Auflageschicht bei.

Weitere Vorteile für den Aufbau und die Funktion ergeben sich dadurch, dass die Andrückeinheit einen gehäuseartigen Aufbau mit zwei Gehäuseteilen aufweist, wobei der Stützlagerteil in einer Gehäusebasis und der Andrücklagerteil in einem Gehäuseaufsatz ausgebildet sind, und dass die Gehäusebasis und der Gehäuseaufsatz über die Kraftbeaufschlagungseinheit radial zueinanden verstellbar gekoppelt sind.

Für den Aufbau und die Funktion weitere vorteilhafte Maßnahmen bestehen darin, dass auf dem Gehäuseaufsatz ein Gehäuseabdeckteil aufgebracht ist und dass in dem Gehäuseaufsatz ein Drehlager für die Drehachse der Andrückrolle ausgebildet ist.

Die Erfindung wird nachfolgend anhand von Ausführungsbeispielen unter Bezugnahme auf die Zeichnungen näher erläutert. Es zeigen:
- Fig. 1: eine schematische Darstellung einer Rohreinheit aus Außenrohr und Innenrohr mit einer eingesetzten Andrückeinheit in stirnseitiger Ansicht,
- Fig. 2: eine Andrückeinheit in perspektivischer Ansicht,
- Fig. 3: eine teilweise geöffnete Andrückeinheit in perspektivischer Ansicht,
- Fig. 4: eine noch weiter teilweise geöffnete Andrückeinheit in einer anderen perspektivischen Ansicht und
- Fig. 5A, 5B und 5C: eine durchsichtige Darstellung der Andrückeinheit in seitlicher Ansicht, rückseitiger Ansicht und in Draufsicht.

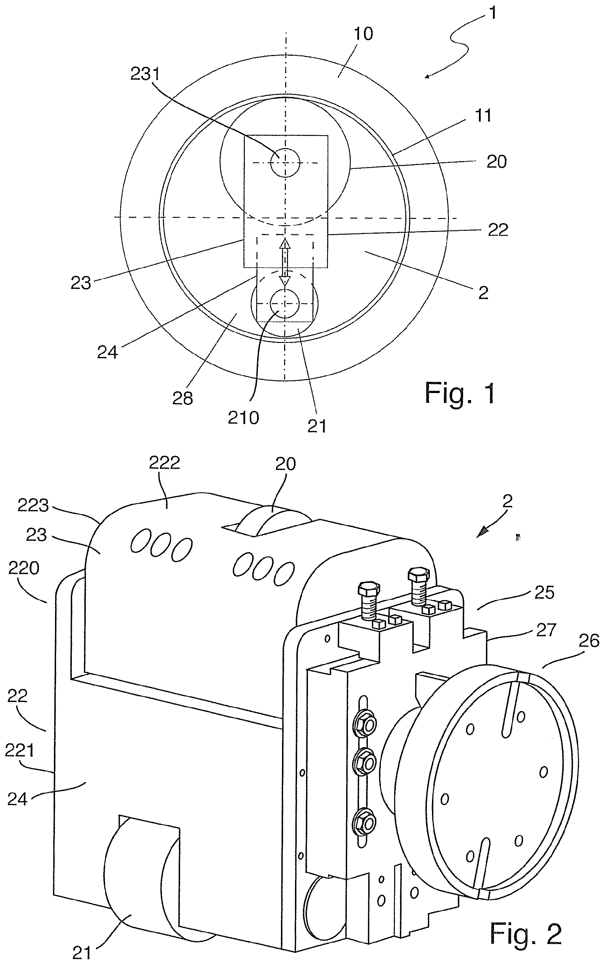

Fig. 1 zeigt eine Rohreinheit 1 aus einem Außenrohr 10, das eine stabile, außenliegende metallische Trägerschicht 10 bildet, und einem Innenrohr 11, das eine im Vergleich zur Trägerschicht relativ dünne, innenliegende metallische Auflageschicht 11 bildet, sowie eine in das Innere der Rohreinheit 1 eingesetzte (schematisch dargestellte) Andrückeinheit 22, um das Innenrohr 11 in einem Einrollvorgang kraftschlüssig und dauerhaft stabil an die Innenfläche des Außenrohrs 10 anzudrücken und ein mehrlagiges, innen beschichtetes Großrohr zu erhalten. Unter dem Begriff des Großrohres sollen Rohre mit Durchmessern von mindestens 150 mm und einer Gesamtwandstärke von mindestens 5 mm verstanden werden, wobei die Dicke der Trägerschicht ein Vielfaches der Dicke der Auflageschicht betragen soll. Die Materialeigenschaften der Auflageschicht sind so gewählt, dass sie mechanischen, physikalischen und/oder chemischen Einwirkungen eines zu befördernden Gutes möglichst gut und dauerhaft wiederstehen. Hierzu ist es von erheblichem Vorteil, wenn die Materialauswahl durch das Fertigungsverfahren möglichst wenig eingeschränkt ist, was durch den Einroll- bzw. Anrollvorgang erreicht wird.

Die in das Rohrinnere eingebrachte Andrückeinheit 22 ist Teil eines Anrollwerkzeugs 2 und weist eine Andrückrolle 20 mit wesentlich geringerem Durchmesser als der Innendurchmesser des Innenrohres 11 auf. Die Andrückrolle 20 ist im Betriebszustand um eine parallel zur Rohrachse gerichtete Drehachse 231 in einem Andrücklagerteil 23 drehbar gelagert. Der Andrückrolle 20 bezüglich der Rohrachse beim Anrollvorgang diametral gegenüberliegend ist als Stützelement eine Stützrolle 21 angeordnet, die sich auf der Innenfläche des Innenrohres 11 beim Einrollvorgang abstützt, um eine genügende Stützkraft zum Andrücken der Andrückrolle 20 beim Einrollvorgang zu bieten. Die Stützrolle 21 ist um eine zur Längsachse der Rohreinheit 1 parallele Lagerachse 210 drehbar gelagert und in einem Stützlagerteil 24 der Andrückeinheit 22, und zwar in einer Stützeinheit 28, aufgenommen. Der Andrücklagerteil 23 und der Stützlagerteil 24 sind in der Andrückeinheit 22 diametral (in radialer Richtung) bezüglich der Rohrachse gegeneinander z. B. hydraulisch oder mittels eines mechanischen Verstellmechanismus verstellbar gelagert, wie der in Fig. 1 eingetragene Doppelpfeil zeigt. Anstelle nur einer Stützrolle können auch mehrere, vorzugsweise in gleichem Winkelabstand zur Diagonalen des Innenrohres durch die Drehachse 231 der Andrückrolle 20 angeordnete Stützrollen 21 und/oder mehrere in Richtung der Rohrachse voneinander beabstandete Stützrollen 21 vorhanden sein. Auch können anstelle nur einer Andrückrolle 20 mehrere vorhanden sein.

Bei dem in Fig. 2 perspektivisch gezeigten Ausführungsbeispiel eines Anrollwerkzeugs 2 mit einer Andrückeinheit 22 weist der Stützlagerteil 24 beispielsweise zwei Stützrollen 21 auf, die im eingesetzten Zustand der Andrückeinheit 22 bezüglich der Diagonalen des Innenrohres 11 durch die Drehachse 231 der Andrückrolle 20 in gleichen Winkelabständen (symmetrisch) versetzt angeordnet sind, wobei in Fig. 2 nur eine der beiden Stützrollen 21 sichtbar ist. Zum rotierenden Antrieb der Andrückeinheit 22 um eine zur Rohrachse konzentrische Rotationsachse wird diese über einen Verbindungsabschnitt 25 mit einem Zwischenteil 27 und einem Koppelteil 26 an eine (nicht gezeigte) stabile Achse bzw. Antriebswelle angeschlossen und über diese mittels einer außerhalb oder innerhalb der Rohreinheit 1 angeordneten (ebenfalls nicht dargestellten) Antriebseinheit rotierend angetrieben, um die Andrückrolle 20 in Umlaufrichtung über die Innenfläche des Innenrohres 11 abzurollen und so den Einrollvorgang zum Aufbringen der Auflageschicht durchzuführen. Der Koppelteil 26 und der Zwischenteil 27 des Verbindungsabschnitts 25 sind zur schwimmenden Lagerung und gegebenenfalls zum Zentrieren der Andrückeinheit 22 in dem Rohrinnern gegeneinander in radialer Richtung verstellbar und der Koppelteil 26 ist flanschartig ausgestaltet, um eine stabile Verbindung mit der Stirnseite bzw. einem Gegenflansch der Achse oder Antriebswelle herzustellen.

Wie Fig. 2 weiter zeigt, ist die Andrückeinheit 22 gehäuseartig aus zwei Gehäuseteilen, nämlich einer Gehäusebasis 221, in dem der Stützlagerteil ausgebildet ist, und einem Gehäuseaufsatz 223 ausgestaltet, in dem der Andrücklagerteil 23 ausgebildet ist. Die Gehäusebasis 221 mit dem Stützlagerteil 24 und der Gehäuseaufsatz 223 mit dem Andrücklagerteil 23 sind über eine Kraftbeaufschlagungseinheit verstellbar miteinander in der Weise gekoppelt, dass sie radial zur Drehachse 231 bzw. zur Lagerachse 210 und damit auch zur Achse oder Antriebswelle bzw. zur Achse des Großrohres radial nach außen auseinander drückbar und nach innen gegeneinander verstellbar sind. Hierzu ist zwischen den beiden Gehäuseteilen eine Verstelleinheit angeordnet, die eine stabile Führung in radialer Richtung sicherstellt. Die Kraftbeaufschlagungseinheit ist beispielsweise als hydraulisch arbeitende Kolben-/Zylindereinheit ausgebildet, über die die erforderliche Druckkraft zum Anpressen der Andrückrolle 20 gut steuerbar oder regelbar aufgebracht werden kann. Der Gehäuseaufsatz 223 ist nach außen mit einem Gehäuseabdeckteil 222 abgedeckt, in dem eine schlitzartige, quer zur Drehachse 231 verlaufende Öffnung eingebracht ist, durch die ein Abschnitt der Andrückrolle 20 nach außen vorsteht, um beim Anrollen des Innenrohres zur Herstellung der Auflageschicht auf deren Innenseite abzurollen. Die Außenkontur des Gehäuseabdeckteils 222 und auch der übrigen Teile des Gehäuses 220 sind dabei so dimensioniert und geformt, dass eine Drehung innerhalb des Innenrohres beim Anrollvorgang ungehindert vonstatten gehen kann, wobei die Stützrollen 21 ebenfalls auf der Innenseite des Innenrohres abgestützt sind.

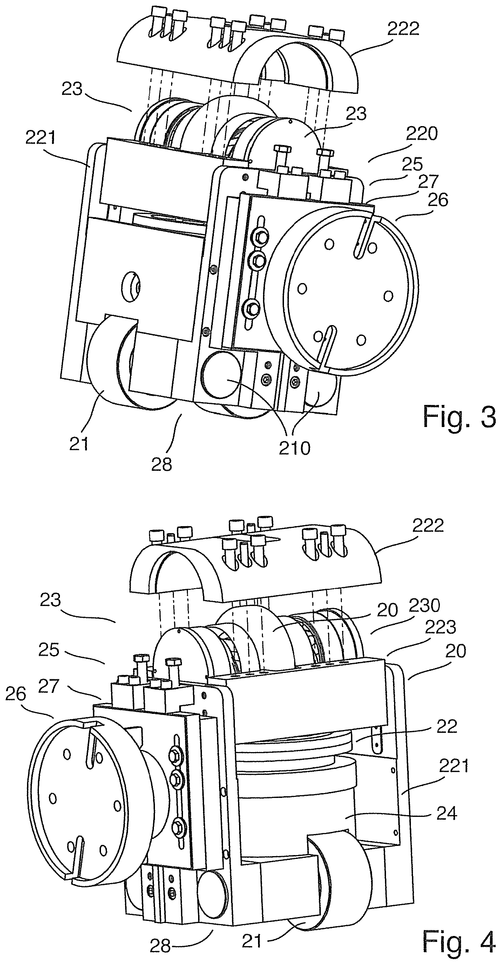

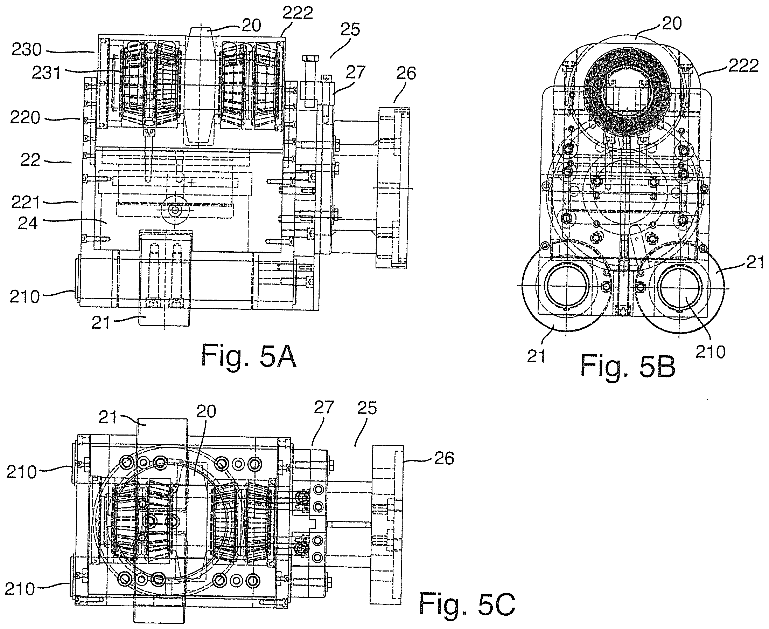

Die Fig. 3 und 4 zeigen das Gehäuse 220 in teilweise geöffnetem Zustand, wobei in Fig. 3 der Gehäuseabdeckteil 222 abgehoben ist und in Fig. 4 zusätzlich eine Seitenwand der Gehäusebasis 221 entfernt ist. Der Gehäuseabdeckteil 222 wird mittels Schrauben an seitlichen Wandabschnitten des Gehäuseaufsatzes 223 stabil festgespannt. In dem Gehäuseaufsatz 223 ist ein Drehlager 230 mit der Drehachse 231 ausgebildet, wobei die Drehachse 231 mittels Rollen- oder Wälzlagern im Innern des Gehäuseaufsatzes 223 stabil gehalten ist, um auch bei hohen Andruckkräften einen sicheren Abrollvorgang und eine eindeutige Führung sicherzustellen. Wie aus den Fig. 5A und 5C ersichtlich, besitzt das Drehlager 230 einen zentrierenden Aufbau mit Schräganordnung der Rollen oder Walzen, so dass die Abrolllinie der Andrückrolle 20 genau eingehalten und ein Verkippen derselben verhindert wird. Die Innenflächen des Gehäuseaufsatzes 223 sind mit an die Lagerelemente des Drehlagers 230 angepassten Aufnahmen versehen. Wie auch aus Fig. 4 ersichtlich ist, wird der Gehäuseaufsatz 223 außer von der in diesem Ausführungsbeispiel durch die KolbenZylindereinheit gebildeten Kraftbeaufschlagungseinheit zwischen einer dem Verbindungsabschnitt 25 zugekehrten vorderen Gehäusewand und einer von disem abgelegenen hinteren Gehäusewand geführt, wobei in der vorderen und hinteren Gehäusewand Führungsstrukturen für daran angepasste Gegen-Führungsstrukturen in den Seitenwänden des Gehäuseaufsatzes 223 ausgebildet sind. Die Lagerachsen 210 der Stützrollen 21 sind in dem unteren Bereich der vorderen und hinteren Gehäusewand sowie in einer bodenseitigen Gehäusewand der Gehäusebasis 221 gelagert, wobei die Stützrollen 21 mit ihrer Außenkontur im unteren Kantenbereich des Gehäuses 221 sowie auf der Unterseite und der betreffenden Außenseite der Gehäusewände vorstehen, um ein ungehindertes Abrollen zu gewährleisten. Die vorstehenden Stützrollen 21 und die diesen gegenüberliegende, über den Gehäuseabdeckteil 222 vorstehende Andrückrolle 20 sind insbesondere auch in Fig. 5B ersichtlich.

Zum Einführen der Andrückeinheit 22 bzw. des Andrückkopfs des Anrollwerkzeugs 2 in die Rohreinheit 1 können der Andrücklagerteil 23 und der Stützlagerteil 24 genügend weit diametral zusammengefahren werden, um sie anschließend in der gewünschten axialen Position auseinander zu bewegen und die Andrückrolle 20 unter Abstützung gegen die Stützrolle(n) 21 zum Einrollen des Innenrohres 11 und Bilden der Auflageschicht mit der erforderlichen Druckkraft hydraulisch oder mittels einer Verstellmechanik zu beaufschlagen. Beim Einrollvorgang wird die Andruckkraft auf die Andrückrolle 20 soweit erhöht, dass beim Abrollen in Umfangsrichtung auf der Innenfläche des Innenrohres 11 dieses gegen die Innenfläche des Außenrohres 10 gepresst und örtlich plastisch so weit verformt wird, dass die gebildete Auflageschicht stabil kraftschlüssig an der Innenfläche des Außenrohres in Anlage bleibt.

Gleichzeitig während der Drehung der Andrückeinheit 22 und damit des Abrollens der Andrückrolle 20 in Umfangsrichtung über die Innenfläche des Innenrohres 11 wird die Andrückeinheit 22 mit der Antriebswelle vorgeschoben. Die Vorschubgeschwindigkeit ist dabei so gewählt, dass der während eines Umlaufs mittels der Andrückrolle 20 plastisch verformte, schraubenlinienförmig mit geringer Steigung umlaufende Streifen von mindestens dem nächsten plastisch verformten, ebenfalls schraubenlinienförmig umlaufenden Streifen überlappt wird und so fort, bis die Auflageschicht über die gewünschte Länge in dem Außenrohr 10 angerollt ist. Durch die mindestens einfache Überlappung der umlaufenden plastisch verformten Streifen wird eine praktisch sehr glatte Struktur der Innenfläche der Auflageschicht erhalten, wie Untersuchungen der Erfinder gezeigt haben.

Bei dem Einrollvorgang können die Umlaufgeschwindigkeit bzw. die Drehzahl und der Vorschub je nach geometrischen und metallurgischen Eigenschaften auf das jeweilige Material des Innenrohres 11 optimal abgestimmt werden. Auch die Querschnittskontur (z. B. flach, konisch oder nach außen konvex) und/oder der Durchmesser der vorzugsweise gehärteten Andrückrolle 20 sowie auch deren Material können geeignet gewählt werden.

Die Andrückkraft der Andrückrolle 20 ist vorzugsweise so gewählt, dass das Außenrohr 10 zumindest im Wesentlichen nicht verformt wird. Dadurch wird die Gefügestruktur der Trägerschicht durch den Beschichtungsvorgang nicht negativ beeinflusst. Jedoch kann, falls erwünscht, auch eine geringe Dehnung des Außenrohres 10 innerhalb der Streckgrenze der Trägerschicht zugelassen werden.

Als Material für das Innenrohr 11 (Schutzrohr, Linerrohr, Inliner, Liner) können alle schweißbaren, korrosionsbeständigen Stähle, Nickel, Nickellegierungen und Titan u.a. eingesetzt werden. Für das dickwandige Außenrohr (Trägerrohr) kommt bevorzugt Kohlenstoffstahl in Betracht.

Anstelle oder zusätzlich zur Drehung der Andrückeinheit 22 beim Einrollvorgang kann die Rohreinheit 1 relativ zu der Andrückeinheit 22 gedreht werden, um den Einrollvorgang zu bewirken.

Das beschriebene Verfahren kann auch zu einer örtlich begrenzten Herstellung oder Wiederherstellung einer mechanischen Bindung eines Rohr-in-Rohr-Systems der genannten Art eingesetzt werden. Auch mehrere aufeinander abgestimmte Innenrohre können in einem Außenrohr 10 (gleichzeitig oder nacheinander) eingesetzt und zu einer mehrlagigen Auflageschicht in der beschriebenen Weise eingerollt werden.

Der Einrollvorgang mit der Andrückeinheit 22 lässt einen weiten Steuerungs- bzw. Regelbereich der Einrollkraft und somit des örtlichen Verformungsgrades der Auflageschicht (des Inliners) zu. Die maximal mögliche kraftschlüssige Verbindung des Außenrohres 10 und des Innenrohres 11 (Rohrpartner) ist abhängig von der Dicke des Innenrohres 10, den mechanischen Eigenschaften, dem örtlichen Verformungsgrad beim Einrollen und auch von den Reibeigenschaften.

Das beschriebene Verfahren ermöglicht es, Werkstoffe des Innenrohres 11 bzw. der Auflageschicht mit einer höheren Streckgrenze im Vergleich zu dem Werkstoff des Außenrohres 10 bei der Herstellung mehrlagiger Großrohre zu verwenden. Dies bietet neben der vorteilhaften Herstellungsweise einen weiteren Vorteil gegenüber den in bekannter Weise hergestellten innen beschichteten Mehrlagenrohren z. B. mittels Hydroforming, bei denen der Werkstoff der Auflageschicht eine niedrigere Streckgrenze haben muss, damit nach der Ausdehnung des Innen- und Außenrohres und der anschließenden gemeinsamen Schrumpfung der beiden Rohre eine kraftschlüssige Verbindung entsteht.

## Patentansprüche

1. Verfahren zum Herstellen eines mehrlagigen Großrohres mit einer Rohreinheit (1) aus einem eine Trägerschicht bildenden Außenrohr (10) und mindestens einem eine Auflageschicht bildenden Innenrohr (11) mit der Folge der Verfahrensschritte:
- Einbringen des Innenrohres (11) in das Außenrohr (10),
- Einführen einer Andrückeinheit (22) mit mindestens einer Andrückrolle (20), die geringeren Durchmesser als der Innendurchmesser des Innenrohres (11) besitzt und mit ihrer Drehachse radial beabstandet von der Längsachse des Innenrohres (11) drehbar gelagert ist,
- Beaufschlagen der Andrückrolle (20) mit radial nach außen gegen die Innenfläche des Innenrohres (11) gerichtetem Anpressdruck,
- Drehen der Andrückeinheit (22) relativ zu der Rohreinheit (1) unter Abrollen der Andrückrolle (20) an der Innenfläche des Innenrohres (11) und Andrücken der Außenfläche des Innenrohres (11) an die Innenfläche des Außenrohres (10) unter örtlicher plastischer Verformung der Innenrohrwandung, wobei die Andrückeinheit (22) beim Abrollen der Andrückrolle (20) dieser diametral entgegenwirkend mittels einer Stützeinheit (28) mit mindestens einer Stützrolle (21) an der Innenfläche des Innenrohres (11) abgestützt wird und während des Abrollens der Andrückrolle (20) die Andrückeinheit (22) gleichzeitig relativ zur Rohreinheit (1) axial vorgeschoben wird.

2. Verfahren nach Anspruch 1,
**dadurch gekennzeichnet,**
**dass** beim Abrollen der Andrückrolle (20) der Andruck so gewählt wird, dass das Außenrohr (10) nicht gedehnt wird oder nur geringfügig unter seiner Streckgrenze gedehnt wird.

3. Verfahren nach Anspruch 1 oder 2,
**dadurch gekennzeichnet,**
**dass** die Andrückeinheit (22) relativ zu der Rohreinheit (1) axial um einen Weg zwischen 1 mm und 10 mm pro Umlauf der Andrückrolle (20) über den Innenumfang des Innenrohres (11) vorgeschoben wird.

4. Verfahren nach einem der vorhergehenden Ansprüche,
**dadurch gekennzeichnet,**
**dass** die relative Drehgeschwindigkeit zwischen Andrückeinheit (22) und Rohreinheit (1) zwischen 5 und 100 Umdrehungen pro Minute liegt.

5. Verfahren nach einem der vorhergehenden Ansprüche,
**dadurch gekennzeichnet,**
**dass** die Andrückeinheit (22) mittels einer koaxial in die Rohreinheit (1) eingeführten Achse relativ zu der Rohrenheit (1) gedreht wird, wobei die Achse mittels eines außerhalb oder innerhalb der Rohreinheit angeordneten Antriebs und/oder die Rohreinheit (1) mittels eines Drehantriebs gedreht wird.

6. Verfahren nach einem der vorhergehenden Ansprüche,
**dadurch gekennzeichnet,**
**dass** die Drehung der Andrückeinheit (22) relativ zu der Rohreinheit (1) und/oder der Andruck gesteuert oder geregelt durchgeführt wird.

7. Verfahren nach einem der vorhergehenden Ansprüche,
**dadurch gekennzeichnet,**
**dass** die Steuerung oder Regelung in Abhängigkeit von geometrischen und/oder metallurgischen Materialeigenschaften der Auflageschicht erfolgt.

8. Beschichtungsvorrichtung zum Aufbringen einer Auflageschicht auf der Innenseite einer Trägerschicht bei der Herstellung eines mehrlagigen Großrohres mit einer eine Kraftbeaufschlagungseinheit aufweisenden Andrückeinheit (22), wobei
- die Beschichtungsvorrichtung ein Anrollwerkzeug (2) mit der Andrückeinheit (22) und der Kraftbeaufschlagungseinheit umfasst,
- die Andrückeinheit (22) mit mindestens einer Andrückrolle (20) geringeren Durchmessers als der Innendurchmesser des herzustellenden Großrohres sowie mit mindestens einem dieser im Betriebszustand mit einer Stützkraft diametral entgegenwirkenden Stützelement versehen ist,
- die Andrückeinheit (22) einen Andrücklagerteil (23), an dem die Andrückrolle (20) drehbar gelagert ist, und einen Stützlagerteil (24) aufweist, an dem das Stützelement gelagert ist,
- die Kraftbeaufschlagungseinheit zumindest teilweise zwischen dem Andrücklagerteil (23) und dem Stützlagerteil (24) angeordnet ist,,
- das mindestens eine Stützelement als mindestens eine Stützrolle (21) ausgebildet ist und
- der Andrücklagerteil (23) und der Stützlagerteil (24) mittels der Kraftbeaufschlagungseinheit bezüglich einer Drehachse (231) der Andrückrolle (20) radial nach außen gegeneinander verstellbar sind.

9. Beschichtungsvorrichtung nach Anspruch 8,
**dadurch gekennzeichnet,**
**dass** die Kraftbeaufschlagungseinheit eine hydraulisch oder mittels mechanischer Spreizteile arbeitende Verstelleinheit aufweist.

10. Beschichtungsvorrichtung nach einem der Ansprüche 8 oder 9,
**dadurch gekennzeichnet,**
**dass** die Andrückrolle (20) mittels einer Drehachse (231) in dem Andrücklagerteil (23) gelagert ist.

11. Beschichtungsvorrichtung nach einem der Ansprüche 8 bis 10,
**dadurch gekennzeichnet,**
**dass** die Stützrolle (21) mittels einer Lagerachse (210) in dem Stützlagerteil (23) drehbar gelagert ist.

12. Beschichtungvorrichtung nach einem der Ansprüche 8 bis 11,
**dadurch gekennzeichnet,**
**dass** die Andrückrolle (20) eine im Querschnitt ebene, schräge oder nach außen konische oder konvexe Andruckfläche besitzt.

13. Beschichtungsvorrichtung nach einem der Ansprüche 8 bis 12
**dadurch gekennzeichnet,**
**dass** die Andrückeinheit (22) mit einem Verbindungsabschnitt (25) mit einem Koppelteil (26) zum Ankoppeln einer zentralen Antriebswelle versehen ist.

14. Beschichtungsvorrichtung nach Anspruch 13,
**dadurch gekennzeichnet,**
**dass** der Verbindungsabschnitt (25) über einen Zwischenteil (27) radial verschiebbar mit dem Koppelteil (26) verbunden ist, so dass die Andrückeinheit (22) bezüglich der Antriebswelle schwimmend gelagert ist.

15. Beschichtungsvorrichtung nach einem der Ansprüche 8 bis 14,
**dadurch gekennzeichnet,**
**dass** die Andrückeinheit (22) einen gehäuseartigen Aufbau mit zwei Gehäuseteilen aufweist, wobei der Stützlagerteil (24) in einer Gehäusebasis (221) und der Andrücklagerteil (23) in einem Gehäuseaufsatz (223) ausgebildet sind, und
**dass** die Gehäusebasis (221) und der Gehäuseaufsatz (223) über die Kraftbeaufschlagung radial zueinander verstellbar gekoppelt sind.

16. Beschichtungsvorrichtung nach Anspruch 15,
**dadurch gekennzeichnet,**
**dass** auf dem Gehäuseaufsatz (223) ein Gehäuseabdeckteil (222) aufgebracht ist und
**dass** in dem Gehäuseaufsatz (223) ein Drehlager (230) für die Drehachse (231) der Andrückrolle (20) ausgebildet ist.

## Claims

1. Method for producing a multi-layer large-diameter pipe comprising a pipe unit (1) consisting of an outer pipe (10) that forms a carrier layer and at least one inner pipe (11) that forms a cladding layer, comprising the following method steps:
- inserting the inner pipe (11) into the outer pipe (10),
- introducing a pressure unit (22) having at least one pressure roller (20) which has a diameter smaller than the inner diameter of the inner pipe (11) and is rotatably mounted with its rotary axle radially spaced apart from the longitudinal axis of the inner pipe (11),
- applying contact pressure, which is directed radially outward against the inner surface of the inner pipe (11), to the pressure roller (20),
- rotating the pressure unit (22) relative to the pipe unit (1), the pressure roller (20) thus rolling against the inner surface of the inner pipe (11) and pressing the outer surface of the inner pipe (11) against the inner surface of the outer pipe (10), causing local plastic deformation of the inner pipe wall, wherein, when the pressure roller (20) is rolling, the pressure unit (22) is supported against the inner surface of the inner pipe (11) so as to act diametrically counter to said roller by means of a support unit (28) having at least one support roller (21), and, while the pressure roller (20) is rolling, the pressure unit (22) is simultaneously pushed forward axially relative to the pipe unit (1).

2. Method according to claim 1,
**characterized in that**
while the pressure roller (20) is rolling, the pressure is selected such that the outer pipe (10) is not expanded, or is expanded only slightly, below its yield point.

3. Method according to either claim 1 or claim 2,
**characterized in that**
the pressure unit (22) is advanced axially relative to the pipe unit (1) by a distance of between 1 mm and 10 mm per rotation of the pressure roller (20) over the inner circumference of the inner pipe (11).

4. Method according to any of the preceding claims,
**characterized in that**
the relative rotational speed between the pressure unit (22) and the pipe unit (1) is between 5 and 100 revolutions per minute.

5. Method according to any of the preceding claims,
**characterized in that**
the pressure unit (22) is rotated relative to the pipe unit (1) by means of an axle inserted coaxially into the pipe unit (1), the axle being rotated by means of a drive arranged outside or inside the pipe unit and/or the pipe unit (1) being rotated by means of a rotary drive.

6. Method according to any of the preceding claims,
**characterized in that**
the rotation of the pressure unit (22) relative to the pipe unit (1) and/or the pressure is controlled in an open- or closed-loop manner.

7. Method according to any of the preceding claims,
**characterized in that**
the open- or closed-loop control is carried out on the basis of geometric and/or metallurgical material properties of the cladding layer.

8. Coating device for applying a cladding layer to the inside of a carrier layer in the production of a multi-layer large-diameter pipe with a pressure unit (22) having a force application unit, wherein
- the coating device comprises a rolling tool (2) having the pressure unit (22) and the force application unit,
- the pressure unit (22) is provided with at least one pressure roller (20) that has a diameter smaller than the inner diameter of the large-diameter pipe to be produced, and with at least one support element that acts diametrically counter to said roller with a supporting force in the operating state,
- the pressure unit (22) has a pressure bearing part (23) on which the pressure roller (20) is rotatably mounted, and a support bearing part (24) on which the support element is mounted,
- the force application unit is at least partially arranged between the pressure bearing part (23) and the support bearing part (24),
- the at least one support element is designed as at least one support roller (21) and
- the pressure bearing part (23) and the support bearing part (24) can be adjusted radially outward relative to one another by means of the force application unit with respect to a rotary axle (231) of the pressure roller (20).

9. Coating device according to claim 8,
**characterized in that**
the force application unit has an adjustment unit that works hydraulically or by means of mechanical expansion parts.

10. Coating device according to either claim 8 or claim 9,
**characterized in that**
the pressure roller (20) is mounted in the pressure bearing part (23) by means of a rotary axle (231).

11. Coating device according to any of claims 8 to 10,
**characterized in that**
the support roller (21) is rotatably mounted in the support bearing part (23) by means of a bearing axle (210).

12. Coating device according to any of claims 8 to 11,
**characterized in that**
the pressure roller (20) has a pressure surface that is flat, inclined or outwardly conical or convex in cross section.

13. Coating device according to any of claims 8 to 12,
**characterized in that**
the pressure unit (22) is provided with a connection portion (25) having a coupling part (26) for coupling a central drive shaft.

14. Coating device according to claim 13,
**characterized in that**
the connection portion (25) is connected to the coupling part (26) via an intermediate part (27) so as to be radially displaceable, such that the pressure unit (22) is mounted so as to float with respect to the drive shaft.

15. Coating device according to any of claims 8 to 14,
**characterized in that**
the pressure unit (22) has a housing-like structure with two housing parts, the support bearing part (24) being formed in a housing base (221) and the pressure bearing part (23) being formed in a housing attachment (223),
and
**in that** the housing base (221) and the housing attachment (223) are coupled so as to be radially adjustable relative to one another via the force application unit.

16. Coating device according to claim 15,
**characterized in that**
a housing cover part (222) is placed on the housing attachment (223)
and
**in that** a rotary bearing (230) for the rotary axle (231) of the pressure roller (20) is formed in the housing attachment (223).

## Revendications

1. Procédé permettant la fabrication d'un gros tube multicouche comportant une unité de tube (1) constituée d'un tube extérieur (10) formant une couche de support et d'au moins un tube intérieur (11) formant une couche de recouvrement, comportant les étapes de procédé suivantes :
- insertion du tube intérieur (11) dans le tube extérieur (10),
- introduction d'une unité de pression (22) comportant au moins un rouleau de pression (20) qui possède un diamètre plus petit que le diamètre intérieur du tube intérieur (11) et est monté rotatif, avec son axe de rotation, de façon radialement espacée de l'axe longitudinal du tube intérieur (11),
- application du rouleau de pression (20) avec une pression de contact dirigée radialement vers l'extérieur contre la surface intérieure du tube intérieur (11),
- rotation de l'unité de pression (22) par rapport à l'unité de tube (1) avec le roulement du rouleau de pression (20) sur la surface intérieure du tube intérieur (11) et pression de la surface extérieure du tube intérieur (11) sur la surface intérieure du tube extérieur (10) avec déformation plastique locale de la paroi de tube intérieur, l'unité de pression (22) étant soutenue sur la surface intérieure du tube intérieur (11) au moyen d'une unité de soutien (28) comportant au moins un rouleau de soutien (21) lors du roulement du rouleau de pression (20), lequel contrecarre diamétralement ledit rouleau de pression, et, pendant le roulement du rouleau de pression (20), l'unité de pression (22) étant simultanément avancée axialement par rapport à l'unité de tube (1).

2. Procédé selon la revendication 1,
**caractérisé en ce**
**que**, lors du roulement du rouleau de pression (20), la pression est choisie de telle sorte que le tube extérieur (10) n'est pas étiré ou n'est étiré que légèrement en dessous de sa limite élastique.

3. Procédé selon la revendication 1 ou 2,
**caractérisé en ce**
**que** l'unité de pression (22) est avancée axialement par rapport à l'unité de tube (1) d'une distance comprise entre 1 mm et 10 mm par tour du rouleau de pression (20) sur la circonférence intérieure du tube intérieur (11).

4. Procédé selon l'une des revendications précédentes,
**caractérisé en ce**
**que** la vitesse de rotation relative entre l'unité de pression (22) et l'unité de tube (1) est comprise entre 5 et 100 rotations par minute.

5. Procédé selon l'une des revendications précédentes,
**caractérisé en ce**
**que** l'unité de pression (22) est tournée par rapport à l'unité de tube (1) au moyen d'un axe inséré coaxialement dans l'unité de tube (1), l'axe étant tourné au moyen d'un entraînement disposé à l'extérieur ou à l'intérieur de l'unité de tube et/ou l'unité de tube (1) étant tournée au moyen d'un entraînement rotatif.

6. Procédé selon l'une des revendications précédentes,
**caractérisé en ce**
**que** la rotation de l'unité de pression (22) par rapport à l'unité de tube (1) et/ou la pression s'effectuent de manière commandée ou régulée.

7. Procédé selon l'une des revendications précédentes,
**caractérisé en ce**
**que** la commande ou la régulation s'effectue en fonction des propriétés de matériau géométriques et/ou métallurgiques de la couche de recouvrement.

8. Dispositif de revêtement permettant l'application d'une couche de recouvrement sur le côté intérieur d'une couche de support lors de la fabrication d'un gros tube multicouche comportant une unité de pression (22) présentant une unité d'application de force, dans lequel
- le dispositif de revêtement comprend un outil de roulement (2) comportant l'unité de pression (22) et l'unité d'application de force,
- l'unité de pression (22) est pourvue d'au moins un rouleau de pression (20) de diamètre inférieur au diamètre intérieur du gros tube à fabriquer ainsi que d'au moins un élément de soutien qui s'y oppose diamétralement dans l'état de fonctionnement avec une force de soutien,
- l'unité de pression (22) présente une partie de palier de pression (23) sur laquelle est monté rotatif le rouleau de pression (20), et une partie de palier de soutien (24) sur laquelle est monté l'élément de soutien,
- l'unité d'application de force est disposée au moins partiellement entre la partie de palier de pression (23) et la partie de palier de soutien (24),
- l'au moins un élément de soutien est réalisé sous forme d'au moins un rouleau de soutien (21) et
- la partie de palier de pression (23) et la partie de palier de soutien (24) sont réglables radialement vers l'extérieur l'une par rapport à l'autre au moyen de l'unité d'application de force par rapport à un axe de rotation (231) du rouleau de pression (20).

9. Dispositif de revêtement selon la revendication 8,
**caractérisé en ce**
**que** l'unité d'application de force présente une unité de réglage fonctionnant hydrauliquement ou au moyen de pièces d'expansion mécaniques.

10. Dispositif de revêtement selon l'une des revendications 8 ou 9,
**caractérisé en ce**
**que** le rouleau de pression (20) est monté dans la partie de palier de pression (23) au moyen d'un axe de rotation (231).

11. Dispositif de revêtement selon l'une des revendications 8 à 10,
**caractérisé en ce**
**que** le rouleau de soutien (21) est monté rotatif dans la partie de palier de soutien (23) au moyen d'un axe de palier (210).

12. Dispositif de revêtement selon l'une des revendications 8 à 11,
**caractérisé en ce**
**que** le rouleau de pression (20) possède, dans sa section transversale, une surface de pression plane, inclinée ou conique ou convexe vers l'extérieur.

13. Dispositif de revêtement selon l'une des revendications 8 à 12,
**caractérisé en ce**
**que** l'unité de pression (22) est pourvue d'un tronçon de raccordement (25) comportant une pièce d'accouplement (26) permettant l'accouplement d'un arbre d'entraînement central.

14. Dispositif de revêtement selon la revendication 13,
**caractérisé en ce**
**que** le tronçon de raccordement (25) est raccordé à la pièce d'accouplement (26) radialement de manière déplaçable par l'intermédiaire d'une pièce intermédiaire (27), de sorte que l'unité de pression (22) est montée flottante par rapport à l'arbre d'entraînement.

15. Dispositif de revêtement selon l'une des revendications 8 à 14,
**caractérisé en ce**
**que** l'unité de pression (22) présente une structure en forme de boîtier comportant deux parties de boîtier, la partie de palier de soutien (24) étant formée dans un fond de boîtier (221) et la partie de palier de pression (23) étant formée dans une couverture de boîtier (223), et
**que** le fond de boîtier (221) et la couverture de boîtier (223) sont accouplés radialement l'un à l'autre de manière réglable par l'intermédiaire de l'application de force.

16. Dispositif de revêtement selon la revendication 15,
**caractérisé en ce**
**qu'**une partie de couvercle de boîtier (222) est déposée sur la couverture de boîtier (223) et
**qu'**un palier de rotation (230) pour l'axe de rotation (231) du rouleau de pression (20) est formé dans la couverture de boîtier (223).
